(19) Europäisches Patentamt / European Patent Office / Office européen des brevets

(11) **EP 3 073 803 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(51) Int Cl.:
***H05B 6/68*** *(2006.01)*   ***H05B 6/70*** *(2006.01)*
***H05B 6/72*** *(2006.01)*

(21) Anmeldenummer: **16162193.3**

(22) Anmeldetag: **24.03.2016**

(54) **VERFAHREN ZUR STEUERUNG EINES MIKROWELLEN-GARGERÄTS SOWIE MIKROWELLEN-GARGERÄT**

METHOD FOR CONTROLLING A MICROWAVE COOKING DEVICE AND MICROWAVE COOKING DEVICE

PROCEDE DE COMMANDE D'UN APPAREIL DE CUISSON A MICROONDES ET APPAREIL DE CUISSON A MICRO-ONDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2015 DE 102015104523**
**09.06.2015 DE 102015109070**

(43) Veröffentlichungstag der Anmeldung:
**28.09.2016 Patentblatt 2016/39**

(73) Patentinhaber: **Topinox Sarl**
**68270 Wittenheim (FR)**

(72) Erfinder:
• **CRAWFORD, Devin**
**83607 Holzkirchen (DE)**
• **TILS, Thomas**
**86899 Landsberg am Lech (DE)**

• **MEO, Fernando**
**80993 München (DE)**
• **BRUNNER, Dirk**
**81241 München (DE)**
• **AGAPKIN, Tanja**
**86836 Untermeitingen (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A1- 2 983 290    EP-A2- 1 643 641**
**WO-A1-2015/052145    WO-A2-2013/156875**

• **None**

**Beschreibung**

Die Erfindung betrifft ein Verfahren zur Steuerung eines Mikrowellen-Gargeräts sowie ein Mikrowellen-Gargerät. Die Erfindung betrifft dabei insbesondere Mikrowellen-Gargeräte für den professionellen Einsatz, wie sie in Kantinen, Restaurants und der Großgastronomie verwendet werden.

Es ist seit Langem bekannt, dass Nahrungsmittel mit Mikrowellenstrahlung gegart werden können. Meist wird die Mikrowellenstrahlung mittels eines Magnetrons erzeugt.

Es ist mittlerweile auch bekannt, dass Mikrowellenstrahlung zum Garen von Nahrungsmitteln dadurch erzeugt werden kann, dass ein von einem Mikrowellengenerator bereitgestelltes Hochfrequenzsignal oder Mikrowellensignal von einem Halbleiterverstärker verstärkt wird. Das Ausgangssignal des Halbleiterverstärkers kann über eine oder mehrere Antennen in einen Garraum des Gargeräts eingekoppelt werden.

Ein Beispiel für ein solches Gargerät, bei dem die Halbleitertechnologie verwendet wird, findet sich in der US 8,338,763 B2. Hierin ist beschrieben, dass die Feldverteilung im Garraum gemessen und für die Steuerung der Feldverteilung genutzt wird, um ein möglichst gleichmäßiges Garergebnis zu erzielen. Die Mikrowellensignale, die für die Feldüberwachung genutzt werden, sind bestimmten Moden im Garraum zugwiesen.

Dieser Ansatz ist aufgrund der Größe des Garraums in einem professionellen Gargerät, beispielsweise einem Combi-Dämpfer, kaum einsetzbar. Kleinste Änderungen der Garraumgeometrie z.B. durch Zubehör, führen zu unvorhersehbaren Änderungen der Feldverteilung im Garraum und erschweren daher die Nutzung der Messsignale erheblich.

In der US 2013/0334215 A1 ist beschrieben, dass in einem Mikrowellengerät mit einer Mehrzahl von Antennen im Garraum über die Anpassung der Impedanz der Leitungen zu den Antennen der Wirkungsgrad und damit die in das Gargut gekoppelte Leistung maximiert werden kann.

Allerdings beschränkt sich die Anpassung an Reflektionen aus dem Garraum auf eine Anpassung der Leitungsimpedanz oder eines Anpassungsnetzwerks, das aus schaltbaren Spulen und/oder Kondensatoren besteht.

In der WO 2011/058538 ist das Garen mittels Mikrowellen beschrieben. Diskutiert werden mehrere Anwendungsfälle, in den sogenannte "Modulation Space Entities" (MSE) als Mess- und Steuerwerte für die Steuerung des Garprozesses mit Mikrowellen genutzt werden. Zu einer "MSE" zählen Frequenz, Amplitude und Phase.

Aus der US 2010/0176123 A1 ist ein Verfahren zum Garen mittels Mikrowellen bekannt, bei dem eine Anpassung der Frequenzen der über Antennen eingespeisten Mikrowellen vorgenommen wird, um die reflektierte Leistung zu reduzieren. Dementsprechend handelt es sich nicht um kohärente Mikrowellensignale, die den Antennen zugeführt werden.

In der US 2010/0176123 A1 wird zudem beschrieben, wie die räumliche Temperaturverteilung von der Phasendifferenz geändert und eventuell optimiert werden kann. Es wird jedoch nicht geschildert wie die Phasendifferenz im tatsächlichen Garprozess angepasst werden soll, um die Effizienz der übertragenen Leistung zu optimieren. Die Wechselwirkung zwischen eingespeisten Mikrowellensignale und dem im Garraum befindlichen Lebensmittel hängt von der Position, Menge und Art des im Garraum befindlichen Lebensmittels ab. Insofern lassen sich Messungen aus einem Experiment auf andere Fälle mit unterschiedlichen Beladungszuständen nicht pauschal übertragen.

In der EP 1 643 641 A2 ist unter anderem ein Gargerät beschrieben, dass zwei in einem Garraum angeordnete Antennen aufweist, die über einen gemeinsamen Verstärker und einen gemeinsamen Phasenschieber mit Mikrowellensignalen versorgt werden, weswegen die relative Phasenlage der den Antennen zugeführten Mikrowellensignalen nicht gesteuert wird.

Aus der WO 2013/156875 A2 ist eine Mikrowellenbaugruppe bekannt, um ein Fluid innerhalb einer Kavität zu erwärmen, wobei das Strahlungsprofil angepasst wird, um eine möglichst homogene Erwärmung zu erzielen. Die Antennen werden mit kohärenten Mikrowellensignalen von einem gemeinsamen Oszillator gespeist.

Die EP 2 983 290 A1 beschreibt eine Schaltung und ein Verfahren, bei dem eine zuvor eingestellte Phasendifferenz im Zuge von Kalibrierungsprozessen überprüft wird.

Aus der WO 2015/052145 A1 ist eine Mikrowellenbaugruppe bekannt, die mehrere Antennen umfasst, die von einer gemeinsamen Mikrowellenquelle gespeist werden, wobei die relative Phasenlage anpassbar ist.

Die Aufgabe der Erfindung besteht darin, ein Verfahren zum Garen mit Mikrowellen sowie ein Mikrowellen-Gargerät zu schaffen, mit denen der Wirkungsgrad eines Mikrowellen-Garprozesses optimiert werden kann.

Zur Lösung dieser Aufgabe ist erfindungsgemäß ein Verfahren zur Steuerung eines Mikrowellengargeräts mit den folgenden Schritten vorgesehen: Einer ersten und mindestens einer zweiten Antenne wird Mikrowellenstrahlung zugeführt, die von einem Halbleiterverstärker stammt und von den Antennen in einen Garraum des Gargeräts eingestrahlt wird. Dann wird ein rückwärtslaufendes Mikrowellensignals, das vom Garraum in die Antenne eingekoppelt wurde, erfasst. Vorwärtslaufende Mikrowellensignale, die von den Antennen in den Garraum eingekoppelt werden, werden an den Antennen erfasst. Anschließend wird die Phasenlage der Mikrowellenstrahlung der beiden Antennen relativ zueinander so gesteuert, dass die Leistung des rückwärtslaufenden Mikrowellensignals minimiert ist. Den Antennen werden dabei kohärente Mikrowellensignale zugeführt. Die erfassten vorwärtslaufenden Mikrowellensignale sowie die erfassten rückwartslaufenden Mikrowellensignale werden zur mathematischen Berechnung einer Änderung der Phasenlage herangezogen, wobei die in ein Gargut eingekoppelte Leistung dynamisch an das jeweils zu garende Gargut angepasst wird.

Zur Lösung dieser Aufgabe ist erfindungsgemäß auch ein Gargerät mit einem Mikrowellengenerator vorgesehen, mindestens einem Halbleiterverstärker und vorzugsweise mindestens zwei Halbleiterverstärkern, mindestens zwei Antennen, die Mikrowellenstrahlung in den Garraum einkoppeln können, mindestens einem Phasenschieber, der mindestens einer der Antennen zugeordnet ist, Erfassungseinheiten, die eingerichtet sind, rückwärtslaufende Mikrowellensignale sowie vorwärtslaufende Mikrowellensignale zu erfassen, und einer Steuerung, die mit dem Phasenschieber gekoppelt ist, um die Phasenlage des an eine der Antennen gelieferten Mikrowellensignals relativ zur Phasenlage des an eine andere Antenne gelieferten Mikrowellensignals zu variieren. Die Steuerung ist ferner eingerichtet, die relative Phasenlage so zu steuern, dass die Leistung des rückwärtslaufenden Mikrowellensignals minimiert ist, wobei die Steuerung eine vorzunehmende Änderung der Phasenlage aufgrund der erfassten rückwärtslaufenden Mikrowellensignale sowie der erfassten vorwärtslaufenden Mikrowellensignale mathematisch ermittelt.

Die Erfindung beruht auf dem Grundgedanken, die Leistung des rückwärtslaufenden Mikrowellensignals als Indikator für den Wirkungsgrad des Mikrowellen-Garprozesses zu verwenden. Die Leistung des rückwärtslaufenden Mikrowellensignals kann dabei mit geringem Aufwand durch Ändern der Phasenlage der (mindestens) zwei Hochfrequenz-Signale geändert werden, die von den beiden Antennen in den Garraum eingekoppelt werden. Hierfür können vergleichsweise einfach aufgebaute elektronische Komponenten und leicht zugängliche Messwerte genutzt werden, sodass die erfindungsgemäße Lösung zuverlässig und kostengünstig ist und die mehreren Antennen in Echtzeit steuern und optimieren kann. Ein weiterer Vorteil besteht darin, dass mit Mikrowellensignalen gearbeitet werden kann, die für alle Antennen dieselbe Frequenz haben, also kohärente Mikrowellensignale. Somit ist es möglich, einen einzigen Mikrowellengenerator bzw. Oszillator zu verwenden, dessen Mikrowellensignal dann mehreren Halbleiterverstärkern zugeführt wird, denen jeweils eine Antenne zugeordnet ist. Insgesamt kann somit mit geringem Aufwand die in den Garraum bzw. das sich dort befindende Gargut eingekoppelte Gesamtleistung maximiert werden. Weiterhin kann die in das Gargut eingekoppelte Leistung dynamisch an das jeweils zu garende Gargut angepasst werden. Durch die zusätzliche Messung der vorwärtslaufenden Mikrowellensignale zu der Messung der rückwärtslaufenden Mikrowellensignale an den Antennen bzw. deren Kanäle ist es möglich, die vorzunehmende Änderung der Phasenlage mathematisch zu ermitteln. Ein rein empirischer Ansatz, der nur auf der Messung der rückwärtslaufenden Mikrowellensignale beruht, ist demnach nicht vorgesehen, da dieser der mathematischen Ermittlung gegenüber einen geringeren Wirkungsgrad aufweist.

Es ist demnach beim Gargerät vorzugsweise nur ein Oszillator vorgesehen, sodass die Antennen von einer gemeinsamen Mikrowellenquelle versorgt werden.

Gemäß einer bevorzugten Ausführungsform der Erfindung ist vorgesehen, dass die Phasenlage der Mikrowellenstrahlung, die einer ersten Antenne zugeführt wird, als konstant angenommen wird und die Phasenlage der Mikrowellenstrahlung, die einer zweiten Antenne zugeführt wird, relativ zur Phasenlage der der ersten Antenne zugeführten Mikrowellenstrahlung variiert wird. Hierdurch verringert sich der Steuerungs- und Regelungsaufwand.

Bei einem rein empirischen Ansatz zur Optimierung des Wirkungsgrads werden lediglich die rückwärtslaufenden Mikrowellensignale in Bezug zueinander gesetzt, wobei jedoch nicht vorwärtslaufende Mikrowellensignale erfasst werden, die zur mathematischen Berechnung der Änderung der relativen Phasenlagen herangezogen werden. Demnach wird beim empirischen Ansatz ein lokales Minium der Leistungen ermittelt, wohingegen bei der mathematischen Ermittlung ein globales Minimum der Leistungen ermittelt wird. Hieraus ergibt sich der geringere Wirkungsgrad der empirischen Methode. Erfindungsgemäß wird der Wirkungsgrad des Garprozesses demnach anhand eines klaren mathematischen Vorgehens optimiert.

Vorteilhafterweise kann mit Mikrowellensignalen gearbeitet werden, die für alle Antennen dieselbe Frequenz haben, sodass ein einziger Mikrowellengenerator bzw. Oszillator verwendet werden kann, dessen Mikrowellensignal mehreren Halbleiterverstärkern zugeführt wird, die jeweils einer Antenne zugeordnet sind.

Alternativ können auch mehrere Mikrowellengeneratoren vorgesehen sein, die jeweils von der Steuerung angesteuert werden, sofern die einzelnen Mikrowellengeneratoren synchronisiert sind, beispielsweise über einen gemeinsamen Referenzoszillator. Hierdurch ergibt sich wiederum eine gemeinsame Mikrowellenquelle, die durch mehrere synchron betriebene Mikrowellengeneratoren ausgebildet ist.

In jedem Fall ist eine gemeinsame Mikrowellenquelle für sämtliche Antennen vorgesehen, sodass die Antennen mit kohärenten Mikrowellensignalen beaufschlagt werden.

Generell werden zur Steuerung der relativen Phasenlage leicht zugängliche Messwerte genutzt, sodass die erfindungsgemäße Lösung zuverlässig und kostengünstig ist. Die in den Garraum bzw. in das im Garraum befindliche Gargut eingebrachte Gesamtleistung kann so mit geringem Aufwand maximiert werden.

Die relativen Phasenlagen der vorwärtslaufenden Mikrowellenstrahlung können in Echtzeit angesteuert werden, sodass sich der Garprozess durchgehend optimieren lässt. Die Anpassung der eingekoppelten Leistung erfolgt also dynamisch, sodass sich die Mikrowelleneinspeisung an veränderte Umstände anpassen lässt.

Um die Leistung des rückwärtslaufenden Mikrowellensignals einer Antenne zu erfassen, ist vorzugsweise ein Richtkoppler zwischen dem Halbleiterverstärker und der Antenne vorgesehen. Weiterhin kann vorgesehen sein, dass der Richtkoppler an einen Detektor angeschlossen ist, der wiederum an die Steuerung angeschlossen ist. Dies ermöglicht es, die Leistung des rückwärtslaufenden Mikrowellensignals mit geringem Aufwand zu bestimmen.

Für die vorwärtslaufenden Mikrowellensignale und die rückwärtslaufenden Mikrowellensignale eines Kanals bzw. einer Antenne kann jeweils eine Erfassungseinheit vorgesehen sein. Alternativ kann jeweils eine Erfassungseinheit einer Antenne zugeordnet sein, sodass diese sowohl die vorwärtslaufenden Mikrowellensignale als auch die rückwärtslaufenden Mikrowellensignale erfasst. Die Umstellung der Erfassungseinheit kann elektronisch erfolgen, wobei zwischen dem Erfassen von vorwärtslaufenden Mikrowellensignalen und rückwärtslaufenden Mikrowellensignalen entsprechend umgeschaltet wird. Ferner kann die Erfassungseinrichtung auch derart eingerichtet sein, dass sie selbständig erfasst, ob es ein vorwärts- oder rückwärtslaufendes Mikrowellensignal ist, bspw. über zwei getrennte Eingänge. Hierdurch ist es generell möglich, die Leistung der vorwärtslaufenden Mikrowellensignale sowie die der rückwärtslaufenden Mikrowellensignale mit geringem Aufwand zu erfassen.

Gemäß einer bevorzugten Ausführungsform der Erfindung sind mehrere Antennen vorgesehen, die auf unterschiedlichen, räumlich definierten Niveaus in den Garraum einstrahlen. Bei den definierten räumlichen Niveaus handelt es sich insbesondere um solche Niveaus, die durch die Einschubebenen beispielsweise eines Einhängegestells vorgegeben sind. Somit kann jeder Einschubebene eine Antenne (oder auch ein Paar von Antennen) spezifisch zugeordnet werden, sodass die Mikrowellenstrahlung, die von der Antenne (oder den Antennen) eines betrachteten Niveaus eingestrahlt wird, hauptsächlich auf das Gargut oder die Gargüter fällt, das bzw. die sich in der entsprechenden Einschubebene befindet bzw. befinden. Hierdurch können gezielt bestimmte Gargüter stärker als andere gegart werden, indem die entsprechenden Antennen von der Steuerung angesteuert werden.

Gemäß einer Ausgestaltung der Erfindung kann vorgesehen sein, dass Amplitude und Phasenlage eines vorwärtslaufenden Mikrowellensignals einer Antenne, die einem nicht zu erwärmenden Gargut im Garraum zugeordnet ist, so angepasst werden, dass die rückwärtslaufenden Mikrowellensignale dieser Antenne minimal sind. Dies ermöglicht es, die unbeabsichtigte Kopplung zwischen einer Antenne, die zum gezielten Erwärmen eines bestimmten Garguts verwendet wird, und einem nicht zu erwärmenden Gargut zu minimieren.

Generell kann die Amplitude und die Phasenlage für das vorwärtslaufende Mikrowellensignal an jeder Antenne individuell angepasst werden. Es liegt also gerade keine allgemeine Anpassung der Amplitude für alle vorwärtslaufenden Mikrowellensignale vor.

Dies wird dadurch erreicht, dass jeder Antenne ein eigener Halbleiterverstärker zugeordnet ist, über den die Amplitude des entsprechenden vorwärtslaufenden Mikrowellensignals der Antenne eingestellt werden kann.

Da zusätzlich die relativen Phasenlagen über die Phasenschieber eingestellt werden können, lässt sich auch eine individuelle Anpassung der relativen Phasenlage für das vorwärtslaufende Mikrowellensignal an jeder Antenne einstellen.

Es findet also gerade keine Anpassung der Frequenz bzw. eine Frequenzmodulation der Mikrowellenstrahlung statt, die über die einzelnen Antennen eingespeist werden, um den Wirkungsgrad zu erhöhen. Die vorwärtslaufenden Mikrowellensignale weisen vielmehr dieselbe Frequenz auf, weswegen es sich um kohärente Mikrowellensignale handelt.

Die Leistung der rückwärtslaufenden Mikrowellensignale wird durch Anpassung der Phase und Amplitude der eingespeisten Mikrowellensignale minimiert. Vorzugsweise wird die Leistung aller rückwärtslaufenden Mikrowellensignale durch Anpassung aller eingespeisten Mikrowellensignale minimiert. Dies geschieht insbesondere dadurch, dass die relative Phasenlage der (mindestens) zwei Mikrowellensignale verändert wird, die von den wenigstens zwei Antennen in den Garraum eingekoppelt werden.

Gemäß einer Ausgestaltung der Erfindung ist vorgesehen, dass die Steuerung mindestens einen PID-Regler enthält. Mit diesem kann mit geringem Aufwand sehr zuverlässig die Phasenlage der Hochfrequenz-Signale in der gewünschten Weise geregelt werden.

Gemäß einem Aspekt werden die vorwärtslaufenden Mikrowellensignale und/oder die rückwärtslaufenden Mikrowellensignale während eines Garprozesses mehrfach erfasst. Hierdurch ist es möglich, dass die mathematischen Berechnungen für die Änderung der relativen Phasenlagen während eines Garprozesses mehrfach durchgeführt werden, um eine optimale Anpassung der relativen Phasenlagen zu erhalten. Die Messungen können insbesondere periodisch durchgeführt werden. Darüber hinaus ist eine Überwachung der vorwärtslaufenden Mikrowellensignale und/oder der rückwärtslaufenden Mikrowellensignale in Echtzeit möglich, also durchgehend, sodass eine stetige Überwachung und Berechnung der Anpassung der relativen Phasenlagen erfolgt.

Ein weiterer Aspekt sieht vor, dass komplexe Streuparameter des Garraums ermittelt werden. Die Streuparameter (kurz: "S-Parameter") stellen generell das Verhältnis des vom Garraum reflektierten Mikrowellensignals, das von einer ersten Antenne eingespeist wurde und in die erste Antenne reflektiert wurde oder in sich reflektiert wird ($S_{11}$), sowie des übertragenen Mikrowellensignals von der ersten Antenne in eine zweite Antenne ($S_{12}$) dar. Mit der Messung der vorwärtslaufenden Mikrowellensignale und der rückwärtslaufenden Mikrowellensignale können die Streuparameter des Garraums in für die mathematische Berechnung ausreichender Weise ermittelt werden, die abhängig von der Garraumgeometrie und/oder dem Garzustand eines Garguts sind. Es ist demnach möglich, die Garraumgeometrie mathematisch zu erfassen, um eine entsprechende Anpassung der relativen Phasenlagen durchführen zu können, wodurch sich der Wirkungsgrad optimieren lässt. Aufgrund der dauerhaften Messung der vorwärtslaufenden Mikrowellensignale und der rückwärtslaufenden Mikrowellensignale ist es möglich, die Streuparameter in Echtzeit während eines Garprozesses zu ermitteln.

Insbesondere werden die Amplituden der Streuparameter ermittelt. Bei den S-Parametern handelt es sich um komplexe Streuparameter, die eine Amplitude sowie eine Phase haben. Die Streuparameter können dementsprechend in einer Streumatrix S zusammengefasst werden, in denen sämtliche Streuparameter enthalten sind. Die Amplitude stellt somit einen wichtigen Parameter dar, um eine Anpassung der relativen Phasenlagen mathematisch berechnen zu können.

Bei der Ermittlung der komplexen Streuparameter wird die Phasenreferenz vorzugsweise so gewählt, dass die Phase der diagonalen Elemente der Streumatrix gleich 0 ist.

Ein Aspekt sieht vor, dass für jede Antenne jeweils das Verhältnis des rückwärtslaufenden Mikrowellensignals und des vorwärtslaufenden Mikrowellensignals ermittelt wird. Die Amplituden der Streuparameter lassen sich so in einfacher Weise ermitteln. Hierzu werden die den Antennen zugeordneten Halbleiterverstärker insbesondere nacheinander eingeschaltet, sodass über die Antennen eine Mikrowellenstrahlung in den Garraum des Gargeräts eingestrahlt wird. Entsprechend kann gleichzeitig an allen Kanälen das Verhältnis des rückwärtslaufenden Mikrowellensignals zum vorwärtslaufenden Mikrowellensignal erfasst werden. Die Amplituden der S-Parameter bei einem eingeschalteten Kanal mit zugeordneter Antenne stellen dabei beispielsweise eine Spalte der Matrix S dar, also die Elemente $S_{12}$ bis $S_{82}$, wenn der zweite Kanal ein vorwärtslaufendes Mikrowellensignal einspeist und insgesamt acht Antennen bzw. Kanäle vorgesehen sind.

Ein weiterer Aspekt sieht vor, dass die Phasenverhältnisse der Streuparameter ermittelt werden. Die Phasenverhältnisse der Streuparameter können im Rahmen der Messung der Amplituden der Streuparameter erfasst werden. Hierzu kann beispielsweise ein Messverfahren verwendet werden, bei dem das empfangene Mikrowellensignal in Bezug zu einem Referenzsignal gesetzt wird.

Insbesondere werden die Phasenverhältnisse der Streuparameter mittels einer Phasenmodulation gemessen, bei der nur die erste und die zweite Antenne mit einem Mikrowellensignal beaufschlagt werden und zumindest an einer Antenne ein rückwärtslaufendes Mikrowellensignal gemessen wird, dessen Amplitude sich durch die Phasenmodulation ändert. Ein derartiges Verfahren ist einfach und kostengünstig. Mit dem vorgesehenen Verfahren zur Ermittlung der Phasenverhältnisse kann am Kanal einer dritten Antenne das rückwärtslaufende Mikrowellensignal gemessen werden, das durch die entsprechenden Streuparameter sowie den vorwärtslaufenden Mikrowellensignalen entsteht, die von der ersten und der zweiten Antenne in den Garraum eingespeist worden sind. Der der ersten Antenne zugeordnete Kanal und der der zweiten Antenne zugeordnete Kanal können als ein Referenzkanal bzw. ein Zielkanal angesehen werden. Das rückwärtslaufende Mikrowellensignal kann auch an einem Kanal gemessen werden, der einer der einspeisenden Antennen zugeordnet ist. Alle weiteren Kanäle können während der Messung passiv geschaltet sein, das heißt, dass sie keine Mikrowellensignale einkoppeln. Zwischen den beiden vorwärtslaufenden Mikrowellensignalen wird eine vorgegebene Phasenmodulation $\Delta\theta$ eingestellt, die eine entsprechende Phasendifferenz zwischen den vorwärtslaufenden Mikrowellensignalen bildet. Bei der Phasenmodulation wird zudem $\Delta\theta$ geändert, sodass maximale Werte sowie minimale Werte des rückwärtslaufenden Mikrowellensignals im Kanal einer der Antennen erfasst werden können. Die nichtdiagonalen Elemente der komplexen Streumatrix S lassen sich so erfassen.

Ein weiterer Aspekt sieht vor, dass an allen weiteren Antennen ein rückwärtslaufendes Mikrowellensignal gemessen wird. Hierdurch ist es möglich, dass an allen Kanälen gleichzeitig die Phasen der Streuparameter ermittelt werden können. Dies stellt eine redundante Messung dar, mit der sich Messfehler reduzieren lassen.

Insbesondere können die Amplituden der der Mikrowellenstrahlung der Antennen basierend auf den erfassten vorwärtslaufenden und rückwärtslaufenden Mikrowellensignale angesteuert werden. Vorzugsweise werden die ermittelten Streuparameter der Streumatrix verwendet sowie eine Singularwertzerlegung der Streumatrix durchgeführt. Bei der Optimierung werden demnach nicht nur die relativen Phasenlagen optimiert, sondern auch die Verteilung der Amplituden der vorwärtslaufenden Mikrowellensignale, die eingespeist werden.

Ein weiterer Aspekt sieht vor, dass die Spannungsversorgung des wenigstens einen Halbleiterverstärker angesteuert wird. Dies geschieht vorzugsweise in Abhängigkeit der erfassten vorwärtslaufenden und rückwärtslaufenden Mikrowellensignale. Hierdurch ist es möglich, den wenigstens einen Halbleiterverstärker optimal zu betreiben, wodurch sich der Wirkungsgrad nochmals erhöht. Der Wirkungsgrad wird demnach zusätzlich durch die Anpassung der Versorgungsspannung erhöht, sodass der Halbleiterverstärker für die vorgegebene Amplitude optimal betrieben wird. Aus der Nachrichtentechnik für Mobilfunk ist eine ähnliche Ansteuerung bekannt, die als "Envelope Tracking" bezeichnet wird. Da Garprozesse deutlich langsamer ablaufen als Amplitudenänderungen im Mobilfunk, kann die Ansteuerung der Spannungsversorgung bei einem Gargerät in technisch einfacher Weise realisiert werden.

Ferner kann der Fortschritt des Garprozesses anhand einer Veränderung der erfassten Mikrowellensignale überwacht werden. Aufgrund der Messung der vorwärtslaufenden Mikrowellensignale und der rückwärtslaufenden Mikrowellensignale sowie deren Veränderungen ist es möglich, eine Veränderung der Streuparameter zu ermitteln, die Aufschluss über den Fortgang des Garprozesses ermöglichen. Insbesondere wird ein Verhältnis der rückwärtslaufenden Mikrowellensignale zu den vorwärtslaufenden Mikrowellensignalen oder ein Phasenverhältnis der Streuparameter überwacht. Generell kann hierdurch in einfacher Weise und mit bestehenden Bauteilen der Garprozess überwacht werden, sodass eine günstige Alternative zur Garprozessüberwachung geschaffen ist. Dies ist möglich, da die Streuparameter der Garraumgeometrie sowie Eigenschaften des Garguts, beispielsweise Wasser- oder Fettgehalt, entsprechen, welche sich bei einem bestimmten Garzustand verändern können. Diese Überwachung kann kontinuierlich und in Echtzeit stattfinden.

Die Steuerung des Gargeräts ist vorzugsweise derart eingerichtet, dass sie die Streuparameter des Garraums ermittelt.

Die Erfindung wird nachfolgend anhand zweier Ausführungsbeispiele beschrieben, die in den beigefügten Zeichnungen dargestellt sind. In diesen zeigen:

- Figur 1 schematisch in einer Schnittansicht ein Gargerät gemäß einer ersten Ausführungsform der Erfindung;

- Figur 2 einen Ausschnitt aus dem Gargerät gemäß Figur 1; und

- Figur 3 schematisch ein Gargerät gemäß einer zweiten Ausführungsform der Erfindung.

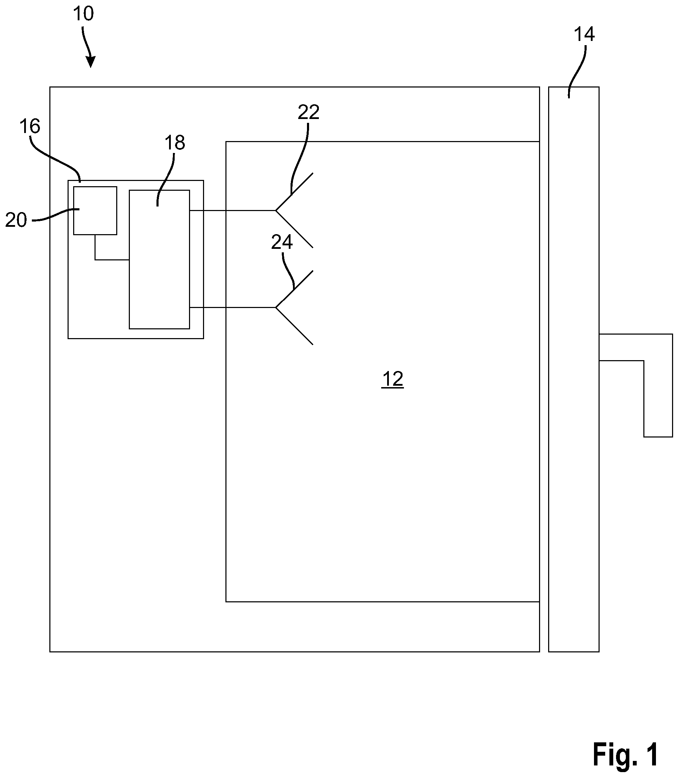

In Figur 1 ist ein Gargerät 10 schematisch gezeigt, das für den professionellen Einsatz verwendet werden kann, beispielsweise in Kantinen, Restaurants oder der Großgastronomie.

Hierbei kann es sich um einen sogenannten Kombidämpfer handeln, der einen Garraum 12 aufweist der von einer Tür 14 verschlossen werden kann. In den Garraum 12 können zu garende Nahrungsmittel eingebracht werden, die in einer Garraumatmosphäre gegart werden. Die wesentlichen Parameter der Garraumatmosphäre sind die Temperatur, die Feuchte sowie die Umwälzgeschwindigkeit. Das Gargerät 10 kann ferner eine Heizung, die Heißluft bereitstellt, einen Dampfgenerator, der Dampf erzeugt, und/oder einen Lüfter aufweisen, der die Garraumatmosphäre umwälzt. Hierdurch lassen sich die zuvor genannten Parameter gezielt beeinflussen. Diese Bauteile sind für die vorliegende Erfindung jedoch von untergeordneter Rolle, weswegen sie aus Gründen der besseren Übersichtlichkeit nicht dargestellt sind.

Es ist aber nicht zwingend erforderlich, dass das Gargerät 10 ein Garen mit einer bestimmten Garraumatmosphäre erlaubt. Für die Erfindung wesentlich ist es, dass das Gargerät 10 in den Garraum 12 eingebrachtes Gargut mittels Mikrowellenstrahlung garen kann. Hierzu ist eine schematisch dargestellte Mikrowellen-Baugruppe 16 vorgesehen, die einen Mikrowellengenerator 18, eine Steuerung 20 und weitere Bauteile umfasst, die in Figur 1 nicht gezeigt sind. Die vom Mikrowellengenerator 18 erzeugte Mikrowellenstrahlung wird in der gezeigten Ausführungsform über zwei Antennen 22, 24 in den Garraum 12 eingestrahlt.

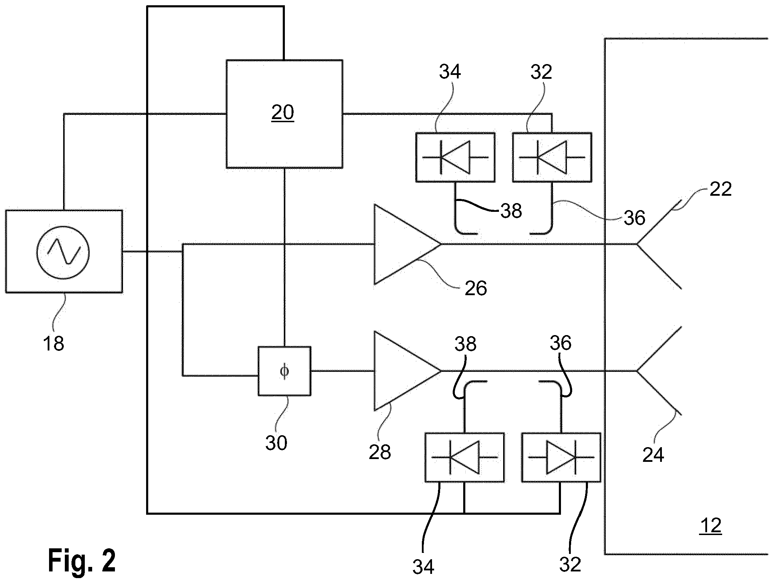

In Figur 2 ist die Mikrowellen-Baugruppe 16 detaillierter gezeigt. Hieraus geht hervor, dass der Mikrowellengenerator 18 mit den Antennen 22, 24 jeweils über einen Halbleiterverstärker 26, 28 zusammenwirkt. Der Mikrowellengenerator 18 kann beispielsweise ein Mikrowellensignal mit einer Frequenz von 2,45 GHz erzeugen, das von den Halbleiterverstärkern 26, 28 empfangen und in eine Mikrowellenleistung von beispielsweise 300 W verstärkt wird.

Der Mikrowellengenerator 18 speist demnach die Halbleiterverstärker 26, 28 mit einem Eingangssignal, die wiederum die Antennen 22, 24 mit einem Mikrowellensignal speisen, das über die Antennen 22, 24 in den Garraum 12 eingestrahlt wird. Bei dem hier dargestellten Mikrowellengenerator 18 handelt es sich um einen Oszillator.

Der Mikrowellengenerator 18 kann einen hier nicht dargestellten Vorverstärker aufweisen. Ferner kann der Mikrowellengenerator 18 auch einen Mischer sowie einen lokalen Oszillator umfassen.

Zur Optimierung des Wirkungsgrads ist ferner vorgesehen, dass die Versorgungsspannung der Halbleiterverstärker 26, 28 angepasst wird, wodurch sich deren Wirkungsgrad erhöht. Die Versorgungsspannung kann ebenfalls über die Steuerung 20 angesteuert werden.

Das den Antennen 22, 24 zugeführte Mikrowellensignal, das über den den Antennen 22, 24 zugeordneten Kanal läuft, wird auch als vorwärtslaufendes Mikrowellensignal bezeichnet. Hierunter ist dasjenige Mikrowellensignal zu verstehen, das von einem entsprechenden Halbleiterverstärker 26, 28 über die ihm zugeordnete Antenne 22, 24 dem Garraum 12 zugeführt wird.

Ferner gibt es noch rückwärtslaufende Mikrowellensignale. Hierunter werden Mikrowellensignale verstanden, welche vom Garraum 12 oder von einer anderen Antenne oder mehreren anderen Antennen in die jeweilige Antenne 22, 24 reflektieren bzw. einkoppeln. Das rückwärtslaufende Mikrowellensignal umfasst somit einen reflektierten Anteil des zuvor eingespeisten Mikrowellensignals der entsprechenden Antenne 22, 24, also einem Anteil des vorwärtslaufenden Mikrowellensignals, sowie Anteile von weiteren Antennen, die Mikrowellensignale in den Garraum 12 einspeisen, die teilweise reflektiert werden.

Die Halbleiterverstärker 26, 28 haben den höchsten Wirkungsgrad im stark nichtlinearen Betrieb (z.B. Klasse E). Im Betrieb der Halbleiterverstärker 26, 28 kann es aufgrund thermischer Einflüsse und durch Änderungen des Betriebspunktes durch Anpassung der Spannungsversorgung dazu kommen, dass sich die Phase des Mikrowellensignals der Halbleiterverstärker 26, 28 gegenüber der Phase des Mikrowellensignals vom Mikrowellengenerator 18 unkontrolliert verändert, wenn die Phasen nicht über einen Regelkreis kontrolliert werden. Daher ist in der gezeigten Ausführungsform dem der zweiten Antenne 24 zugeordneten Halbleiterverstärker 28 ein Phasenschieber 30 vorgeschaltet, über den die Phase des Mikrowellensignals geregelt werden kann. Grundsätzlich ist die Phase des Mikrowellensignals am Ausgang der Halbleiterverstärker 26, 28 frequenz-, temperatur- und leistungsabhängig. Die Leistungsabhängigkeit hängt mit der Ansteuerung der Versorgungsspannung zusammen, die an ein optimales einzuspeisendes Mikrowellensignal angepasst ist.

Der Phasenschieber 30 ist in der gezeigten Ausführungsform separat vom Mikrowellengenerator 18 dargestellt, er kann jedoch auch Teil des Mikrowellengenerators 18 sein, der beispielsweise digital ansteuerbar ist.

Zur Regelung der Phase über den Phasenschieber 30 ist der Phasenschieber 30 mit der Steuerung 20 gekoppelt, sodass die Steuerung 20 den Phasenschieber 30 ansteuern kann.

Die Steuerung 20 steuert den Phasenschieber 30 in Abhängigkeit von Eingangssignalen, die die Steuerung 20 über eine erste Erfassungseinheit 32 und eine zweite Erfassungseinheit 34 erhält, die der zweiten Antenne 24 bzw. deren Kanal jeweils zugeordnet sind. Die erste Erfassungseinheit 32 ist mit einem ersten Richtkoppler 36 gekoppelt, der rückwärtslaufende Mikrowellensignale aus dem der zweiten Antenne 24 zugeordneten Kanal abzweigt, wohingegen die zweite Erfassungseinheit 34 mit einem zweiten Richtkoppler 38 gekoppelt ist, der vorwärtslaufende Mikrowellensignale aus dem der zweiten Antenne 24 zugeordneten Kanal abzweigt, die in die Antenne 24 eingekoppelt sind.

Der ersten Antenne 22 bzw. dem Kanal der ersten Antenne 22 sind ebenfalls zwei Erfassungseinheiten 32, 34 sowie damit gekoppelte Richtkoppler 36, 38 zugeordnet, deren Mikrowellensignale ebenfalls als Eingangssignale der Steuerung 20 dienen, um den Phasenschieber 30 anzusteuern, wie nachfolgend noch erläutert wird.

Die Richtkoppler 36, 38, die zusammen mit den Erfassungseinheiten 32, 34 zur Phasenmessung der Mikrowellensignale dienen, sind am Ausgang des jeweiligen Halbleiterverstärkers 26, 28 angeordnet, wodurch sichergestellt ist, dass die Referenzebene für die Phasenmessung nach dem Ausgang der Halbleiterverstärker 26, 28 und so nah wie möglich an den jeweiligen Antennen 22, 24 ist. In der gezeigten Ausführungsform ist die Referenzebene am entsprechenden Richtkoppler 36, 38.

Die Steuerung 20 kann somit Informationen über die an den Antennen 22, 24 rückwärtslaufenden Mikrowellensignale erhalten, die vom Garraum 12 und anderen Antennen in die Antennen 22, 24 eingekoppelt wurden.

Zusätzlich ist es in einer bevorzugten Ausführungsform möglich, dass die Steuerung 20 Informationen über die an den Antennen 22, 24 vorliegenden vorwärtslaufenden Mikrowellensignale erhält, sofern die Erfassungseinheiten 32, 34 auch die vorwärtslaufenden Mikrowellensignale erfassen.

Anhand dieser Eingangssignale kann die Steuerung 20 die Phasenlage der vorwärtslaufenden Mikrowellenstrahlung der Antenne 24 relativ zur vorwärtslaufenden Mikrowellenstrahlung der Antenne 22 ansteuern, indem sie den Phasenschieber 30 ansteuert, der der zweiten Antenne 24 zugeordnet ist. Hierbei ist es das Ziel der Steuerung 20, die Leistung der rückwärtslaufenden Mikrowellensignale zu minimieren, da dies bedeutet, dass die in den Garraum 12 eingebrachte Mikrowellenstrahlung größtenteils vom im Garraum 12 befindlichen Gargut absorbiert worden ist. Hierdurch wird der Wirkungsgrad entsprechend optimiert.

Über die Regelung des Phasenschiebers 30 wird somit sichergestellt, dass die in den Erfassungseinheiten 34 gemessene Leistung minimiert wird.

Im Betrieb des Gargeräts 10 ändert sich die Phase der Mikrowellensignale nur langsam (Größenordnung wenige Sekunden), sodass der Phasenschieber 30 mit einem üblichen Regelverfahren und Reglern die entsprechenden Phasen ohne großen Aufwand anpassen kann. Bei den verwendeten Reglern kann es sich beispielsweise um PID-Regler handeln.

Nachfolgend wird dies für den in Figur 2 gezeigten Aufbau mathematisch erläutert. Hierfür werden periodische Mikrowellensignale in der komplexen Ebene definiert:

$$\cos(\omega t - \varphi) = \mathrm{Re}\{e^{j(\omega t - \varphi)}\} \text{ wird als } e^{-j\varphi} \text{ abgekürzt.}$$

Das vorwärtslaufende Mikrowellensignal vom ersten Halbleiterverstärker 26, das an der ersten Antenne 22 ankommt, wird als $V_0$ bezeichnet. Der Einfachheit halber kann angenommen werden, dass sich das vorwärtslaufende Mikrowellensignal an der zweiten Antenne 24 nur durch den Phasenversatz $\phi$ vom Phasenschieber 30 und einen unbekannten Phasenversatz $\theta$, der von mehreren Faktoren wie z.B. Betriebspunkt des Verstärkers, Frequenz oder Temperatur beeinflusst wird, vom vorwärtslaufende Mikrowellensignal an der ersten Antenne 22 unterscheidet.

Das vorwärtslaufende Mikrowellensignal an der zweiten Antenne 24 ist daher:

$$V_0 e^{-j(\varphi + \theta)}$$

Die Streuparameter (engl. "S-Parameter") beschreiben das Verhältnis des vom Garraum 12 reflektierten Mikrowellensignals an der ersten Antenne 22 ($S_{11}$) und des übertragenen Mikrowellensignals von der zweiten Antenne 24 auf die erste Antenne 22 ($S_{21}$).

Das rückwärtslaufende Mikrowellensignal s der ersten Antenne 22, das über den Richtkoppler 36 an der Erfassungseinheit 32 gemessen wird, kann über die Streuparameter wie folgt ausgedrückt werden:

$$s = V_0\left(S_{11} + S_{21}e^{j(\varphi+\theta)}\right)$$

Wichtig ist dabei, dass die Streuparameter Eigenschaften des Garraums 12 sind und von dessen geometrischen Aufbau sowie vom Gargut und von den Antennen 22, 24 und deren Anbindung an die Verstärker 26, 28 abhängen.

Die Erfassungseinheit 32 misst die Leistung des Mikrowellensignals s. Der Einfachheit halber wird der Betrag $V_0$ für die weitere Rechnung nicht mitgetragen. Die gemessene Leistung an der Erfassungseinheit 32 ist proportional:

$$s \cdot s^* = |s|^2 \propto |S_{11}|^2 + |S_{21}|^2 + 2\mathrm{Re}\{S_{11}S_{21}\}\cos(\varphi+\theta)$$

Hierbei bedeutet * die Konjugate der komplexen Zahl.

Diese Leistung ist der Anteil der verfügbaren Leistung aus den Halbleiterverstärkern 26, 28, der nicht an die Last (insbesondere das Gargut im Garraum 12) übertragen wird. Diese Verlustleistung kann durch Änderung der Phase $\phi$ mit dem Phasenschieber 30 minimiert werden, damit der letzte Term möglichst klein wird. Das heißt:

$$\cos(\varphi+\theta) = -1$$

Somit kann durch Änderung der Phasendifferenz die an das Gargut gelieferte Leistung maximiert werden.

Das Prinzip lässt sich auf eine beliebige Anzahl von Mikrowellensignalen und Antennen übertragen, solange die relative Phase der jeweiligen Mikrowellensignale von der Steuerung 20 durch Steuerung von Phasenschieber geändert werden kann. Es können also abweichend von der Darstellung in den Figuren 1 und 2 auch mehr als zwei Antennen verwendet werden.

Wenn mehr als zwei Antennen verwendet werden, ergibt sich eine mehrdimensionale Optimierungsaufgabe, um die rückwärtslaufende Leistung an den Antennen mittels Steuerung der Phase gezielt zu minimieren.

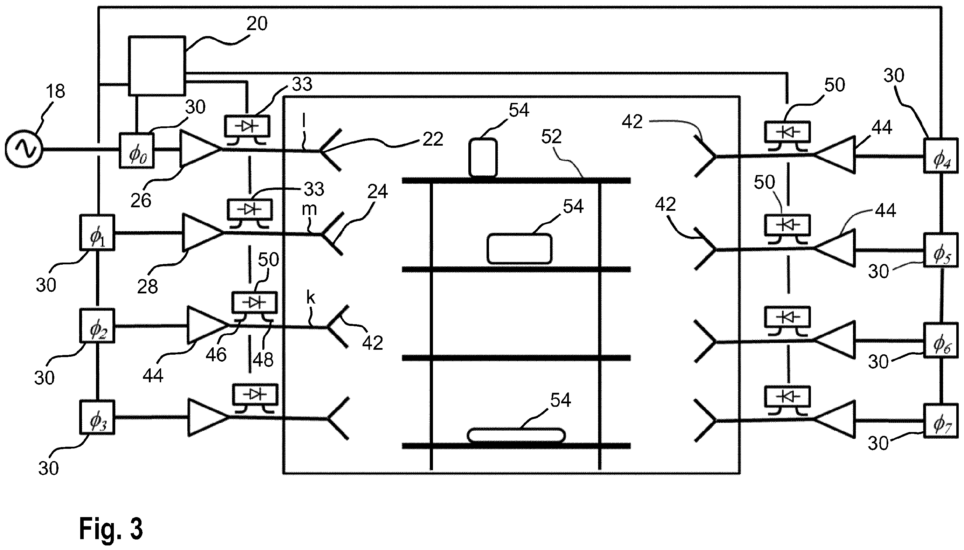

In Figur 3 ist eine zweite Ausführungsform gezeigt, die sich gegenüber der ersten Ausführungsform nur dahingehend unterscheidet, dass zusätzliche Antennen 42 vorgesehen, denen jeweils ein Phasenschieber 30 ($\phi_2$ bis $\phi_7$), ein zusätzlicher Halbleiterverstärker 44, ein weiterer erster Richtkoppler 46, ein weiterer zweiter Richtkoppler 48 sowie eine zusätzliche Erfassungseinheit 50 zugeordnet sind.

Die der ersten Antenne 22 und der zweiten Antenne 24 zugeordneten Erfassungseinheiten 32 bis 34 sind in dieser Ausführungsform jeweils zu einer gemeinsamen Erfassungseinheit 33 zusammengefasst, sodass pro Antenne 22, 24 nur eine Erfassungseinheit 33 vorgesehen ist, die sowohl die vorwärtslaufenden Mikrowellensignale als auch die rückwärtslaufenden Mikrowellensignale detektieren kann. Dies gilt in analoger Weise für die zusätzlichen Erfassungseinheiten 50, die den weiteren Antennen 42 zugeordnet sind.

In dieser Ausführungsform ist der ersten Antenne 22 ein optionaler Phasenschieber 30 zugeordnet, der mit $\phi_0$ bezeichnet ist. Dieser kann aber auch entfallen, da es auf die relative Phasenlage der von den Antennen 22, 24, 42 eingespeisten Mikrowellensignalen ankommt.

Wie aus Figur 3 hervorgeht, sind zwischen dem einen Mikrowellengenerator 18 und allen Halbleiterverstärkern 26, 28, 44 jeweils ein Phasenschieber 30 angeordnet, sodass zunächst die Phasen der kohärenten Mikrowellensignale der gemeinsamen Mikrowellenquelle, also dem Mikrowellengenerator 18, verschoben werden können und anschließend die Leistung durch die Halbleiterverstärker 26, 28, 44 verstärkt wird. Hierdurch lässt sich eine bessere Anpassung vornehmen, da die Phasenanpassung der Mikrowellensignale bei kleiner Amplitude erfolgt.

Darüber hinaus ist in der Figur 3 gezeigt, dass ein als Gestell ausgebildetes Garzubehör 52 mit darauf platziertem Gargut 54 sich im Garraum 12 befindet, wobei das Gargut 54 in verschiedenen Ebenen angeordnet sind und jeweils ein Antennenpaar einer Ebene zugeordnet ist. Hierdurch kann das Gargut in verschiedenen Ebenen unterschiedlich gegart werden.

Die Funktionsweise der beiden Ausführungsformen ist im Wesentlichen gleich und wird nachfolgend erläutert.

Grundsätzlich gilt, dass das vorwärtslaufende Mikrowellensignal an Antenne Nummer "m" mit $V_m^+$ bezeichnet wird, und das rückwärtslaufende Mikrowellensignal mit $V_m^-$ bezeichnet wird. Die Phasenschieber 30 werden von der Steuerung 20 kontrolliert, um die relative Phase der jeweils vorwärtslaufenden Mikrowellensignale an den Antennen 22, 24, 42 zu ändern. Die rückwärtslaufenden Mikrowellensignale an allen Antennen 22, 24, 42 werden von den Erfassungseinheiten 33, 50 gemessen und in der Steuerung 20 ausgewertet.

Der unbekannte Phasenversatz der jeweiligen Mikrowellensignale, der im ersten Beispiel als $\theta$ bezeichnet wurde, kann der Einfachheit halber in diesem Beispiel in den Streuparameter übernommen werden. Zum Beispiel wird für die Mikrowellensignalübertragung von Antenne m auf Antenne *n eine* Änderung der Übertragungsstreuparameter $S_{21}$ mit folgender Anpassung ausgedrückt:

$$S'_{mn} \rightarrow e^{-j(\theta_m - \theta_n)} S_{mn}$$

Das rückwärtslaufende Mikrowellensignal, das an der ersten Antenne 22 von der Erfassungseinheit 33 gemessen wird, wird als Summe der Beiträge aus allen gesendeten Mikrowellensignale ausgedrückt als:

$$V_m^- = \sum_{n=1}^{N} S'_{mn} V_n^+ e^{-j\varphi_n}$$

Da das vorwärtslaufende Mikrowellensignal an der ersten Antenne 22 als Bezug für alle Phasenversätze genommen wird, wird $\phi_1 = 0°$ gesetzt. Die Anzahl der Antennen ist N. Die Erfassungseinheiten 33, 50 messen die Leistung der Mikrowellensignale. Ähnlich wie im vorherigen Beispiel kann die gemessene Leistung der rückwärtslaufenden Mikrowellensignale als

$$|V_m^-|^2 = \sum_{p=1}^{N} \sum_{n=1}^{N} V_p^{+*} S'^*_{mp} S'_{mn} V_n^+ e^{-j(\varphi_n - \varphi_p)}$$

ausgedrückt werden.

Eine Optimierung des Wirkungsgrades zielt darauf, diese Verlustleistung zu minimieren. Unter der Annahme, dass die gesendete Leistung an allen Antennen 22, 24, 42 gleich ist, wird durch die Minimierung dieser Summe mittels der Phasenschieber 30 der Wirkungsgrad für den Garprozess maximiert.

Mit dem Verfahren und dem Gargerät 10 lässt sich aber nicht nur der Wirkungsgrad des Garprozesses insgesamt maximieren. Es ist auch möglich, eine teilweise selektive Erwärmung zu realisieren, indem die rückwärtslaufende Leistung gezielt an den Antennen 22, 24, 42 minimiert wird, die in direkter Nähe des zu erwärmenden Garguts befinden. Dieser Ansatz eignet sich besonders für einen größeren Garraum 12, der eine hohe Anzahl an Moden im Garraum 12 ermöglicht.

In diesem Fall bezieht sich die "Größe" des Garraums 12 auf die Wellenlänge der Mikrowellenenergie. Zum Beispiel ist die Wellenlänge bei 2,45 GHz 12,2 cm. Ein großer Garraum 12 wäre dann $3 \times 3 \times 3$ Wellenlängen und hätte, bei dieser Frequenz, ein Volumen von 50 Litern. Ein quadratischer Garraum dieser Größe würde über 200 Moden ermöglichen.

Anhand von Figur 3 wird nun die räumlich gezielte Erwärmung erläutert. Die gezielte Erwärmung oder gezielte Übertragung von Mikrowellen an das Gargut 54 wird mit einem Mikrowellengenerator 18 und mehreren Verstärkern 26, 28, 44 anhand der Messungen in den Erfassungseinheiten 33, 50 und Steuerung der Phase mit den Phasenschiebern 30 realisiert.

Es soll hier gezielt ein Gargut 54 erwärmt werden, das beispielsweise mittig im Garzubehör 52 angeordnet ist. Ein anderes Gargut 54, das oben oder unten im Garzubehör 52 angeordnet ist, soll nicht (oder jedenfalls deutlich weniger) erwärmt werden.

Das mittig angeordnete Gargut 54 ist relativ zu der Antenne 24 und der gegenüberliegenden Antenne 42 so angeordnet, dass ein wesentlicher Anteil (30-40 %) der Energie aus den Antennen 24, 42 direkt auf das Gargut im Garraum 12 trifft, ohne dass es zu Reflektionen und Streuungen kommt.

Im Falle einer Schlitzantenne, Hornantenne oder offenen Hohlleiter ist die Abstrahlung vorwiegend normal zur Wand des Garraums 12 und zur Öffnung der Antenne. Damit kann die Orientierung der Antennen im Verhältnis zum Gargut spezifiziert werden, um eine direkte Sicht zwischen Antennen und Gargut zu etablieren.

Die Mikrowellensignale aus anderen Antennen, die ganz oder teilweise vom gezielt zu erwärmenden, mittig angeordneten Gargut 54 durch das Einhängegestell oder anderes Garzubehör 52 abgeschirmt sind, können dazu genutzt werden, um die gestreute Mikrowellenenergie von den Antennen 24, 42, die auf das hier nicht zu erwärmende Gargut 54 einfallen, zu minimieren.

Die Antenne 24 und die ihr gegenüberliegend angeordnete Antenne 42 mit bester Sicht zum gezielt zu erwärmenden, mittig angeordneten Gargut 54 werden mit einer hohen Leistung angesteuert. Die Leistung der beiden Antennen 24, 42 bezogen auf das vorwärtslaufende Mikrowellensignal wird gleichgesetzt, damit der Garprozess im gezielt zu erwärmenden Gargut 54 möglichst schnell verläuft.

Genaue Angaben zur Leistung und Garzeit sind vom Gargut und vom Garprozess abhängig. Eine typische Mikrowellenleistung für gezielte Erwärmung liegt zwischen 100 Watt und 300 Watt bei einer Frequenz von 2,45 GHz.

Die Phasendifferenz zwischen den Mikrowellensignalen von der Antenne 24 und der ihr gegenüberliegenden Antenne 42 wird dann angepasst, bis das rückwärtslaufende Mikrowellensignal der jeweiligen Antennen, das mit den zugeordneten Erfassungseinheiten 33, 50 gemessen wird, minimiert wird.

Ein Anteil der Energie aus den Antennen 24, 42 wird auch auf das nicht zu erwärmende Gargut 54 treffen, das oben und unten im Garzubehör 52 liegt. Die Antenne 22 und die ihr gegenüberliegende Antenne 42, die dem nicht zu erwärmenden, oben im Garzubehör 52 angeordneten Gargut 54 am nächsten sind, nehmen diese Bestrahlung aus dem vom nicht zu erwärmenden Gargut reflektierten Mikrowellensignal auf und erlauben dessen Erfassung mit den ihnen zugeordneten Erfassungseinheiten 33, 50.

Die Amplitude und Phase der vorwärtslaufende Mikrowellensignale an den beiden Antennen 22, 42, die dem nicht zu erwärmenden Gargut am nächsten sind, können angesteuert werden, um die rückwärtslaufenden Mikrowellensignale an diesen Antennen 22 und 42 zu minimieren. Aufgrund des allgemein bekannten Reziprozitätsprinzip negieren damit die Mikrowellensignale aus den Antennen 22 und 42 die unbeabsichtigte Kopplung zwischen den dem gezielt zu erwärmenden, mittig angeordneten Gargut 54 zugeordneten Antennen 24, 42 und dem nicht zu erwärmenden, oben angeordneten Gargut 54.

Auf ähnlicher Art und Weise kann auch die Bestrahlung von anderem, sich im Garraum 12 befindenden Gargut durch die Antennen 22, 24, 42 reduziert werden. Somit wird eine bevorzugte Erwärmung des einen Garguts gegenüber einem anderem Gargut im gleichen Garraum 12 realisiert.

Nachfolgend wird erläutert, wie die Steuerung 20 ausgehend von den empfangenen Mikrowellensignalen den bzw. die Phasenschieber 30 ansteuert, um den Wirkungsgrad zu optimieren.

Hierzu werden die optimalen komplexen Mikrowellensignale durch eine optimale Zusammensetzung der Amplitude und der Phase anhand von Streuparametern (kurz: S-Parametern) ermittelt. Die Mikrowellensignale können wie folgt beschrieben werden:

$$A * \cos(\omega t - \varphi)$$

Die Phasenlage und Amplitude A der einzuspeisenden Mikrowellensignale lassen sich ausgehend von den Streuparametern ermitteln, deren Berechnung später beschrieben wird.

Die Streuparameter (kurz: "S-Parameter") stellen das Verhältnis des vom Garraum reflektierten Mikrowellensignals, das beispielsweise von einer ersten Antenne 22 eingespeist wurde und in die erste Antenne 22 zurückreflektiert wurde ($S_{11}$), sowie des übertragenen Mikrowellensignals von der ersten Antenne 22 in die zweite Antenne 24 ($S_{12}$) dar.

Die Streuparameter lassen sich für beliebig viele Antennen über den folgenden bekannten Zusammenhang definieren:

$$\begin{bmatrix} b_1 \\ b_2 \\ b_3 \\ \vdots \end{bmatrix} = \begin{bmatrix} S_{11} & S_{12} & S_{13} \cdots \\ S_{21} & S_{22} & S_{23} \\ S_{31} & S_{32} & S_{33} \\ & & \vdots \end{bmatrix} \cdot \begin{bmatrix} a_1 \\ a_2 \\ a_3 \\ \vdots \end{bmatrix}$$

Diese Formel kann in einfacher Weise und kompakter wie folgt ausgedrückt werden:

$$\vec{b} = \mathbf{S} * \vec{a}$$

Hierbei umfasst die Streumatrix **S** die Streuparameter, wobei die Matrix **S** aufgrund der Reziprozität symmetrisch ist. Die Werte im Vektor $\vec{b}$ entsprechen den jeweils rückwärtslaufenden Mikrowellensignalen an den jeweiligen Antennen bzw. den zugeordneten Kanälen. Die Werte des Vektors $\vec{a}$ stellen die komplexen Mikrowellensignale dar, welche von der Steuerung 20 angesteuert werden, um die reflektierte Leistung zu minimieren.

Die reflektierte Leistung ist proportional zum Quadrat der euklidischen Norm des Vektors $\vec{b}$ also zu $\|\vec{b}\|^2$. Daher ist es das Ziel der Steuerung 20, einen Vektor $\vec{a}$ zu finden, bei dem die euklidische Norm des Vektors $\vec{b}$ also $\|\vec{b}\|$ minimiert ist. Hierbei ist zu beachten, dass die gesamte verfügbare Leistung eine feste Größe ist, die für die Optimierung nicht variiert wird. Ansonsten würde sich der Wirkungsgrad entsprechend verringern.

Ferner ist zu beachten, dass die Halbleiterverstärker 26, 28, 44 selten bis nie an ihrer Leistungsobergrenze betrieben werden, sodass die Spannungsversorgung der Halbleiterverstärker 26, 28, 44 angepasst werden kann, um den Wirkungsgrad zu optimieren. Der Wirkungsgrad wird durch eine Anpassung des Signalpegels optimiert. Darüber hinaus verbessert sich die Lebensdauer der Halbleiterverstärker 26, 28, 44 deutlich gegenüber der Situation, bei der die Halbleiterverstärker 26, 28, 44 regelmäßig mit voller Leistung betrieben werden würden.

Für die weitere Diskussion wird zur Vereinfachung $\|\vec{a}\| = 1$ gesetzt, sodass die errechneten Werte der übertragenen bzw. einzuspeisenden Signalstärke auf die lineare Skalierung der Werte von $\vec{a}$ skaliert werden können. Um die optimalen Werte für den Vektor $\vec{a}$ der einzuspeisenden Mikrowellensignale zu ermitteln, kann eine Singularwertzerlegung für die Streumatrix S angewandt werden, die in der Steuerung 20 durchgeführt wird. Gemäß der Singularwertzerlegung muss es für die Streumatrix S Matrizen U und V geben, über die sich die Streumatrix S wie folgt darstellen lässt:

$$\mathbf{S} = \mathbf{U}^{*}\hat{\mathbf{K}}\mathbf{V}$$

Bei der Matrix $\hat{\mathbf{K}}$ handelt es sich um eine diagonale Matrix, die nur einzelne Elementwerte $\hat{\mathbf{k}}_{ii}$ hat. Diese Werte stellen die Singularwerte der Matrix S dar. Bei den Matrizen U und V handelt es sich um unitäre Matrizen, sodass sie mit ihrer jeweils inversen Matrix multipliziert eine Einheitsmatrix ergeben. Dies lässt sich wie folgt darstellen:

$$\mathbf{UU}^{*} = \hat{\mathbf{1}} = \mathbf{U}^{*}\mathbf{U} \quad \text{bzw.} \quad \mathbf{VV}^{*} = \hat{\mathbf{1}} = \mathbf{V}^{*}\mathbf{V}$$

Mit diesen unitären Matrizen können Transformationen der Vektoren $\vec{a}$ und $\vec{b}$ durchgeführt werden, sodass sich folgende transformierte Vektoren $\vec{a'}$ und $\vec{b'}$ der Vektoren $\vec{a}$ und $\vec{b}$ ergeben:

$$\vec{a'} = \mathbf{V} * \vec{a} \quad \text{bzw.} \quad \vec{b'} = \mathbf{U} * \vec{b}$$

Da es sich bei den beiden Matrizen U und V um unitäre Matrizen handelt, weisen die entsprechend transformierten Vektoren $\vec{a'}$ und $\vec{b'}$ die folgenden Eigenschaften auf:

$$\left\|\vec{a'}\right\| = \|\vec{a}\| \quad \text{bzw.} \quad \left\|\vec{b'}\right\| = \|\vec{b}\|$$

Hieraus geht hervor, dass die Transformationen keinen Einfluss auf die eingebrachten und reflektierten Leistungen haben, da die transformierten Werte unverändert gegenüber der tatsächlichen Leistungen sind, die sich durch die entsprechenden euklidischen Normen der Vektoren $\vec{a}$ und $\vec{b}$ ergeben.

Mit den transformierten Vektoren $\vec{a'}$ und $\vec{b'}$ lässt sich die eingangs beschriebene Gleichung, die den Zusammenhang der Streuparameter mit der reflektierten Leistung und der einzuspeisenden Mikrowellensignale beschreibt, wie folgt darstellen:

$$\vec{b'} = \hat{\mathbf{K}} * \vec{a'}$$

Da es sich bei der Matrix R um eine diagonale Matrix handelt, ist jedes Element in Vektor $\vec{b'}$ direkt proportional zum entsprechenden Element im Vektor $\vec{a'}$ Daher kann sich das Minimum der reflektierten Leistung aus dem zugehörigen Eigenvektor zum kleinsten Singularwert ableiten lassen. Die Singularwerte können vom kleinsten zum größten Wert sortiert werden, sodass sich der optimale Wirkungsgrad dann erzielen lässt, wenn Folgendes gilt:

$$\mathbf{a'_0} = \begin{bmatrix} 1 \\ 0 \\ 0 \\ \vdots \end{bmatrix}$$

Dies liegt daran, dass die Transformation des Vektors $\vec{b}$ zum Vektor $\vec{b'}$ hinsichtlich der reflektierten Leistung keinen Unterschied ergibt, da die euklidischen Normen des Vektors $\vec{b'}$ und des Vektors $\vec{b}$ gleich sind.

Die Amplitude und die Phase der von der Steuerung 20 und den Phasenschiebern 30 anzusteuernden Mikrowellensignale, die zur minimalen reflektierten Leistung und damit zum optimalen Wirkungsgrad beim beladenen Garraum 12 führen, können demnach aus dem folgenden Verhältnis berechnet werden:

$$\vec{a}_0 = \mathbf{V}^* * \vec{a}'_0$$

Die Werte des Vektors $\vec{a}_0$ ergeben die Amplitude und die Phase der Mikrowellensignale für die entsprechend vorwärtslaufenden Mikrowellensignale einer jeden Antenne 22, 24, 42. Demnach ist es möglich, die vorwärtslaufenden Mikrowellensignale, die über die Antennen 22, 24, 42 in den Garraum 12 eingespeist werden sollen, mathematisch zu berechnen, insbesondere die jeweilige relative Phasenlage.

Hierfür ist es lediglich erforderlich, dass die Streuparameter bzw. die Streumatrix S des Garraums 12 bekannt sind bzw. ist. Des Weiteren sind die Singularwerte und die unitäre Matrizen unverändert, wenn nur die Beträge der Diagonalwerte der Streumatrix bekannt sind. Die nicht-diagonalen komplexen Streuparameter lassen sich wie folgt ermitteln.

Zunächst kann die Amplitude der jeweiligen komplexen Streuparameter ermittelt werden, indem alle im Garraum 12 befindliche Antennen 22, 24, 42 nacheinander Mikrowellensignale in den Garraum 12 einspeisen. Die Amplituden ergeben sich dann entsprechend aus dem Verhältnis des rückwärtslaufenden zum vorwärtslaufenden Mikrowellensignal an den Antennen 22, 24, 42 bzw. den zugeordneten Kanälen. Im Ausführungsbeispiel der Figuren 1 und 2 sind es die beiden Antennen 22, 24 während es im Ausführungsbeispiel der Figur 3 insgesamt acht Antennen 22, 24, 42 sind.

Über jede aktive Antenne, also eine Antenne, die ein vorwärtslaufendes Mikrowellensignal in den Garraum 12 aussendet, kann die entsprechende Spalte der Streumatrix S ermittelt werden.

Die Messung der Mikrowellensignale erfolgt, wie bereits erläutert, über die Richtkoppler 36, 38 und die Erfassungseinheiten 32, 33, 34, 50, die den jeweiligen Antennen 22, 24, 42 zugeordnet sind. Die Messung kann je nach Anzahl der Antennen relativ schnell erfolgen (wenige Sekunden) und in der Steuerung 20 entsprechend ausgewertet werden.

Ferner kann im Rahmen der Messung der Amplituden direkt das Phasenverhältnis der Streuparameter zueinander ermittelt werden.

Für die Erläuterung der Messung des Phasenverhältnisses der Streuparameter wird im Folgenden auf Figur 3 verwiesen, anhand derer das allgemeine Konzept verständlicher erläutert werden kann.

Hierzu erfolgt über die Steuerung 20 eine Phasenmodulation zwischen einem ersten Kanal l, der als Referenzkanal angesehen werden kann, und einem zweiten Kanal m vor, der als Zielkanal angesehen werden kann. Bei den beiden Kanälen l, m kann es sich beispielsweise um die der ersten Antenne 22 und der zweiten Antenne 24 handeln.

Ferner wird beispielsweise über den Phasenschieber 30, der der zweiten Antenne 24 zugeordnet ist, ein gezielter Phasenversatz $\Delta\theta$ an dem der zweiten Antenne 24 zugeordneten Kanal gegenüber dem der ersten Antenne 22 zugeordneten Kanal von der Steuerung 20 eingestellt.

Während der Phasenmodulation kann an einem Kanal k ein rückwärtslaufendes Mikrowellensignal gemessen werden, wobei der Kanal k beispielsweise einer der zusätzlichen Antennen 42 zugeordnet ist. Der Kanal k kann aber auch dem ersten Kanal l oder zweiten Kanal m entsprechen, sofern es sich hierbei um das rückwärtslaufende Mikrowellensignal im entsprechenden Kanal l, m handelt. Zur besseren Verständlichkeit wird zunächst allgemein vom Kanal k ausgegangen, sodass sich für das rückwärtslaufende Mikrowellensignal im Kanal k Folgendes ergibt:

$$b_k = S_{kl} * a_l + S_{km} * a_m$$

Bei den S-Parametern handelt es sich um die entsprechend zwischen den Kanälen k, l, m wirkenden Streuparametern, wohingegen die a-Werte das vorwärtslaufende Mikrowellensignal des l-ten bzw. m-ten Kanals sind, die im konkreten Beispiel der ersten Antenne 22 bzw. der zweiten Antenne 24 zugeordnet sind.

Während der Messung des Phasenverhältnisses der S-Parameter können alle weiteren Kanäle, die den weiteren in Figur 3 dargestellten Antennen 42 zugeordnet sind, passiv geschaltet sein. Demnach wird lediglich ein einzuspeisendes Mikrowellensignal an den Kanälen l und m bzw. den Antennen 22, 24 angelegt, sodass über die Kanäle l und m bzw. der ersten und der zweiten Antenne 22, 24 ein vorwärtslaufendes Mikrowellensignal in den Garraum 12 eingespeist wird.

Da es sich bei den Mikrowellensignalen um komplexe Wellen handelt, beträgt die Leistung des am Kanal k gemessenen rückwärtslaufenden Mikrowellensignals entsprechend:

$$\|b_k\|^2 = |S_{kl}|^2 * |a_l|^2 + |S_{km}|^2 * |a_m|^2 + 2|a_l||a_m||S_{kl}||S_{km}|\cos(\varphi_{lm} + \Delta\theta)$$

Hierbei stellt $\Delta\theta$, wie bereits erwähnt, die von der Steuerung 20 vorgegebene Phasenvariation dar, die der Phasendifferenz zwischen den beiden vorwärtslaufenden Mikrowellensignalen der Kanäle I und m entspricht. Ferner stellt $\varphi_{lm}$ die Phasendifferenz der Streuparameter $S_{kl}$ und $S_{km}$ dar.

Während der Phasenmodulation wird $\Delta\theta$ geändert, wodurch maximale sowie minimale Werte der rückwärtslaufenden Mikrowellensignale von der Steuerung 20 erfasst und ausgewertet werden können.

Der zu ermittelnde Phasenwinkel ergibt sich dann bei einem maximalen rückwärtslaufenden Mikrowellensignal am Kanal k durch:

$$\cos(\varphi_{lm} + \Delta\theta_{k(\max)}) = \frac{\|b_k\|_{max}^2 - |S_{kl}|^2 * |a_l|^2 + |S_{km}|^2 * |a_m|^2}{2|a_l||a_m||S_{kl}||S_{km}|}$$

Die Phasendifferenz $\Delta\theta_{k(\max)}$ entspricht demnach der Phase, bei der die Stärke des rückwärtslaufenden Mikrowellensignals im Kanal k am stärksten ist, also bei dem $\|b_k\|$ maximal ist.

Hieraus ergibt sich aufgrund der trigonometrischen Funktion für $\varphi_{lm}$ der Kanäle I, m:

$$\varphi_{lm} + \Delta\theta_{k(\max)} = 2\pi n;\, n \in Z$$

In analoger Weise ergibt sich für die rückwärtslaufenden Mikrowellensignale mit minimaler Signalstärke:

$$\varphi_{lm} + \Delta\theta_{k(\min)} = 2\pi\left(n + \frac{1}{2}\right);\, n \in Z$$

Für alle Werte der bei der Phasenmodulation angesteuerten $\Delta\theta$ werden zugehörige $\Delta\theta_{(\max)}$ und $\Delta\theta_{(\min)}$ aufgenommen und ausgewertet. Aus diesen Messungen und den obigen Formeln können die entsprechenden Phasendifferenzen $\varphi_{lm}$ ermittelt werden, die der Phasendifferenz der Streuparameter $S_{kl}$ und $S_{km}$ entsprechen. Zur genauen Berechnung können die Daten Fehlerminimierungsverfahren unterzogen werden, beispielsweise der Methode der kleinsten Quadrate oder ähnliche. Bei den entsprechenden Methoden und Verfahren wird die Periodizität der trigonometrischen Funktionen berücksichtigt.

Die Phasendifferenz der Übertragungsstrecke zwischen den Kanälen I und m lässt sich ermitteln, wenn das rückwärtslaufende Mikrowellensignal dasjenige im Kanal der ersten Antenne 22 bzw. der zweiten Antenne 24 ist, also dem Kanal I bzw. dem Kanal m. Anders ausgedrückt kann die Phasendifferenz der Übertragungsstrecke zwischen den Kanälen I und m mit obigem Verfahren ermittelt werden, wenn k=m bzw. k=m ist.

Des Weiteren kann bei der Messung die Redundanz erhöht werden, indem die Mikrowellensignale der rückwärtslaufenden Wellen an allen übrigen, passiv geschalteten Kanälen gleichzeitig aufgenommen werden. Hierdurch lassen sich Messfehler reduzieren.

Bei Wiederholung der Messung für die weiteren Kanäle können so alle nicht-diagonalen Elemente der komplexen Streumatrix **S** ermittelt werden. Die Phasenwerte der Diagonalwerte der Streumatrix **S** lassen sich hiermit nicht messen. Dies ist, wie erwähnt, für eine optimale Ansteuerung nicht erforderlich, da die Singularwerte der Matrix **S** unabhängig von der Phase der Diagonalwerte sind. Für die Bestimmung der relativen Phase und des Betrags der vorwärtslaufenden Mikrowellensignale, die über die Antennen 22, 24 eingespeist werden sollen, reicht es aus, dass die Diagonalwerte der Streumatrix **S** mit den Betragswerten versehen sind, also den Amplituden.

Demnach wird die Umwandlung der Phasenmodulation auf Amplitudenmodulation genutzt während zwei Antennen 22, 24, 42 kohärent betrieben werden, um die optimale relative Phasenlage aufgrund der Streugeometrie des Garraums 12 und dem darin befindlichen Gargut und/oder Garzubehör zu ermitteln.

Generell ist es mit dem Verfahren möglich, die relativen Phasenlagen der vorwärtslaufenden Mikrowellensignale und deren Amplituden anzusteuern, wobei deren Werte zuvor mathematisch ermittelt worden sind. Ferner können die Spannungsversorgungen der Halbleiterverstärker 26, 28, 44 angesteuert werden, um diese entsprechend optimal zu betreiben, da die Spannungsversorgung eines Halbleiterverstärkers 26, 28, 44 an die jeweilige Amplitude des vorwärtslaufenden Mikrowellensignals angepasst ist.

Das beschriebene Verfahren ermöglicht somit die Nutzung allgemein verfügbarer Komponenten, um die Mikrowellenleistung mittels Halbleiterverstärker 26, 28, 44 in optimaler Weise zu nutzen. Mit dem Verfahren ist eine schnelle Auswertung und Verarbeitung der gemessenen Daten in Echtzeit möglich, da die vorwärtslaufenden Mikrowellensignale und/oder die rückwärtslaufenden Mikrowellensignale ständig von den Erfassungseinheiten 32, 33, 34, 50 erfasst und an die Steuerung 20 geschickt werden. Eine Ansteuerung der Phasenschieber 30 ist somit in Echtzeit möglich, wobei die Regelgröße für die Ansteuerung der Phasenschieber 30 ebenfalls in Echtzeit mathematisch ermittelt wird.

Für die Berechnung der Streuparameter in Echtzeit weist die Steuerung 20 vorzugsweise einen geeigneten Mikroprozessor auf, mit dem eine schnelle digitale Signalverarbeitung möglich ist.

Aufgrund der Berechnung der optimalen Phase und dem optimalen Betrag der Mikrowellensignale wird unter anderem kein Phasendetektor benötigt, über den die Phasen an den Antennen 22, 24, 42 erfasst wird.

Eine Anpassung der Frequenzen der vorwärtslaufenden Mikrowellensignale findet nicht statt, um die reflektierte Leistung zu minimieren bzw. den Wirkungsgrad zu erhöhen. Vielmehr handelt es sich um kohärente Mikrowellensignale, die über die Antennen 22, 24, 42 in den Garraum 12 eingespeist werden, deren Phase und Amplitude bei kohärenter Anregung entsprechend angepasst werden.

Die Qualität der Einkopplung der vorwärtslaufenden Mikrowellensignale bzw. die Optimierung des Wirkungsgrads ist demnach unabhängig von der Frequenz.

Es ist also eine gemeinsame Mikrowellenquelle vorgesehen, die wenigstens zwei Antennen mit kohärenten Mikrowellensignalen versorgt, wobei deren relative Phase sowie die Amplitude der vorwärtslaufenden Mikrowellensignale eingestellt werden, um den Wirkungsgrad zu erhöhen.

Das von der gemeinsamen Mikrowellenquelle ausgehende Mikrowellensignal wird demnach zunächst auf die unterschiedlichen Kanäle aufgeteilt. Dabei durchlaufen die Mikrowellensignale der entsprechenden Kanäle zunächst die Phasenschieber, um eine relative Phasenlage der vorwärtslaufenden Mikrowellensignale einzustellen. Wie bereits erläutert, kann das vorwärtslaufende Mikrowellensignal, welches der ersten Antenne zugeordnet ist, keinen Phasenschieber durchlaufen bzw. wird diese Phasenlage als Referenz verwendet. Nachdem die Phasen relativ zueinander eingestellt worden sind, werden die vorwärtslaufenden Mikrowellensignale in den Kanälen, die den Antennen jeweils zugeordnet sind, über die Halbleiterverstärker verstärkt, bevor sie über die Antennen in den Garraum eingestrahlt werden.

Die Erfassungseinrichtungen sind vorzugsweise nach den Halbleiterverstärkern und vor den Antennen angeordnet.

Generell ist es möglich, über die Einstellung der Amplitude und der relativen Phase der eingespeisten Mikrowellensignale einen hohen Wirkungsgrad zu erhalten. Die beschriebene mathematische Methode zur Ermittlung der optimalen Werte für die vorwärtslaufenden Mikrowellensignale kann für mehrere Frequenzen implementiert werden, sodass sich eine gute Gleichmäßigkeit beim Garen von Gargut und ein hoher Wirkungsgrad erzielen lassen.

Des Weiteren ist eine Modenmischung über ein Lüfterrad nicht notwendig, da bereits ein stationär optimiertes Mikrowellenfeld im Garraum 12 erzeugt wird, das keine Hot-Spots oder ähnliches aufweist.

Die von der Steuerung 20 ermittelten Werte können ferner zur Überwachung des Garprozesses eingesetzt werden, da eine Veränderung der in der Steuerung 20 eingehenden Mikrowellensignale auf eine Veränderung des Garzustands des Garguts hinweisen kann.

**Patentansprüche**

1. Verfahren zur Steuerung eines Mikrowellen-Gargeräts (2) mit den folgenden Schritten:

   - einer ersten Antenne (22) und mindestens einer zweiten Antenne (24, 42) wird Mikrowellenstrahlung zugeführt, die von einem Halbleiterverstärker (26, 28, 44) stammt und von den Antennen (22, 24, 42) in einen Garraum (12) des Gargeräts (10) eingestrahlt wird;
   - ein rückwärtslaufendes Mikrowellensignal, das vom Garraum (12) in die Antenne (22, 24, 42) eingekoppelt wurde, wird erfasst;
   - vorwärtslaufende Mikrowellensignale, die von den Antennen (22, 24, 42) in den Garraum (12) eingekoppelt werden, werden an den Antennen (22, 24, 42) erfasst;
   - die Phasenlage der Mikrowellenstrahlung der beiden Antennen (22, 24, 42) relativ zueinander wird so gesteuert, dass die Leistung des rückwärtslaufenden Mikrowellensignals minimiert ist, wobei den Antennen (22, 24, 42) kohärente Mikrowellensignale zugeführt werden,

   **dadurch gekennzeichnet, dass**
   die erfassten vorwärtslaufenden Mikrowellensignale sowie die erfassten rückwärtslaufenden Mikrowellensignale zur mathematischen Berechnung einer Änderung der Phasenlage herangezogen werden, wobei die in ein Gargut eingekoppelte Leistung dynamisch an das jeweils zu garende Gargut angepasst wird.

2. Verfahren nach Anspruch 1, **dadurch gekennzeichnet, dass** die Phasenlage der Mikrowellenstrahlung, die einer ersten Antenne (22) zugeführt wird, als konstant angenommen wird und die Phasenlage der Mikrowellenstrahlung, die einer zweiten Antenne (24, 42) zugeführt wird, relativ zur Phasenlage der der ersten Antenne (22) zugeführten Mikrowellenstrahlung variiert wird.

3.  Verfahren nach Anspruch 1 oder Anspruch 2, **dadurch gekennzeichnet, dass** Amplitude und Phasenlage eines vorwärtslaufenden Mikrowellensignals einer Antenne (22, 24, 42), die einem nicht zu erwärmenden Gargut im Garraum (12) zugeordnet ist, so angepasst werden, dass die rückwärtslaufenden Mikrowellensignale dieser Antenne (22, 24, 42) minimal sind.

4.  Verfahren nach einem der vorhergehenden Ansprüche, **dadurch gekennzeichnet, dass** die vorwärtslaufenden Mikrowellensignale und/oder die rückwärtslaufenden Mikrowellensignale während eines Garprozesses mehrfach erfasst werden.

5.  Verfahren nach einem der vorhergehenden Ansprüche, **dadurch gekennzeichnet, dass** komplexe Streuparameter des Garraums (12) ermittelt werden.

6.  Verfahren nach Anspruch 5, **dadurch gekennzeichnet, dass** die Amplituden der Streuparameter ermittelt werden.

7.  Verfahren nach Anspruch 6, **dadurch gekennzeichnet, dass** für jede Antenne (22, 24, 42) jeweils das Verhältnis des rückwärtslaufenden Mikrowellensignals und des vorwärtslaufenden Mikrowellensignals ermittelt wird.

8.  Verfahren nach einem der Ansprüche 5 bis 7, **dadurch gekennzeichnet, dass** die Phasenverhältnisse der Streuparameter ermittelt werden.

9.  Verfahren nach Anspruch 8, **dadurch gekennzeichnet, dass** das Phasenverhältnis der Streuparametermittels einer Phasenmodulation gemessen wird, bei der nur die erste Antenne (22) und die zweite Antenne (24, 42) mit einem Mikrowellensignal beaufschlagt werden und zumindest an einer Antenne (22, 24, 42) ein rückwärtslaufendes Mikrowellensignal gemessen wird, dessen Amplitude sich durch die Phasenmodulation ändert.

10. Verfahren nach Anspruch 9, **dadurch gekennzeichnet, dass** an allen weiteren Antennen (22, 24, 42) ein rückwärtslaufendes Mikrowellensignal gemessen wird.

11. Verfahren nach einem der vorhergehenden Ansprüche, **dadurch gekennzeichnet, dass** die Amplituden der Mikrowellenstrahlung der Antennen (22, 24, 42) basierend auf den erfassten vorwärtslaufenden und rückwärtslaufenden Mikrowellensignalen angesteuert werden.

12. Verfahren nach einem der vorhergehenden Ansprüche, **dadurch gekennzeichnet, dass** die Spannungsversorgung des wenigstens einen Halbleiterverstärker (26, 28, 44) angesteuert wird.

13. Verfahren nach einem der vorhergehenden Ansprüche, **dadurch gekennzeichnet, dass** der Fortschritt des Garprozesses anhand einer Veränderung der erfassten vorwärtslaufenden Mikrowellensignale und/oder einer Veränderung der erfassten rückwärtslaufenden Mikrowellensignale überwacht wird.

14. Gargerät mit einem Mikrowellengenerator (18), mindestens einem Halbleiterverstärker (26, 28, 44), mindestens zwei Antennen (22, 24, 42), die Mikrowellenstrahlung in den Garraum (12) einkoppeln können, mindestens einem Phasenschieber (30), der mindestens einer der Antennen (22, 24, 42) zugeordnet ist, Erfassungseinheiten (32, 34), die eingerichtet sind, rückwärtslaufende Mikrowellensignale sowie vorwärtslaufende Mikrowellensignale zu erfassen, und einer Steuerung (20), die mit dem Phasenschieber (30) gekoppelt ist, um die Phasenlage des an eine der Antennen (22, 24, 42) gelieferten Mikrowellensignals relativ zur Phasenlage des an eine andere Antenne (22, 24, 42) gelieferten Mikrowellensignals zu variieren, **dadurch gekennzeichnet, dass** die Steuerung (20) ferner eingerichtet ist, die relative Phasenlage so zu steuern, dass die Leistung des rückwärtslaufenden Mikrowellensignals minimiert ist, wobei die Steuerung (20) eine vorzunehmende Änderung der Phasenlage aufgrund der erfassten rückwärtslaufenden Mikrowellensignale sowie der erfassten vorwärtslaufenden Mikrowellensignale mathematisch ermittelt.

**Claims**

1.  A method of controlling a microwave cooking appliance (2), comprising the following steps:

    - a first antenna (22) and at least one second antenna (24, 42) are supplied with microwave radiation originating from a semiconductor amplifier (26, 28, 44) and radiated by the antennas (22, 24, 42) into a cooking chamber (12) of the cooking appliance (10);

- a backward travelling microwave signal coupled by the cooking chamber (12) into the antenna (22, 24, 42) is detected;

- forward travelling microwave signals coupled by the antennas (22, 24, 42) into the cooking chamber (12) are detected at the antennas (22, 24, 42);

- the phase position of the microwave radiation of the two antennas (22, 24, 42) in relation to each other is controlled such that the power of the backward travelling microwave signal is minimized, wherein coherent microwave signals are supplied to the antennas (22, 24, 42),

**characterized in that**

the detected forward travelling microwave signals as well as the detected backward travelling microwave signals are used for mathematical calculation of a change in the phase position, the power coupled into a food to be cooked being dynamically adjusted to the respective food to be cooked.

2. The method according to claim 1, **characterized in that** the phase position of the microwave radiation supplied to a first antenna (22) is assumed to be constant and the phase position of the microwave radiation supplied to a second antenna (24, 42) is varied relative to the phase position of the microwave radiation supplied to the first antenna (22).

3. The method according to claim 1 or claim 2, **characterized in that** the amplitude and phase position of a forward travelling microwave signal of an antenna (22, 24, 42) which is associated with a food to be cooked that is in the cooking chamber (12) and is not to be heated are adjusted such that the backward travelling microwave signals of this antenna (22, 24, 42) are minimal.

4. The method according to any of the preceding claims, **characterized in that** the forward travelling microwave signals and/or the backward travelling microwave signals are detected several times during a cooking process.

5. The method according to any of the preceding claims, **characterized in that** complex scattering parameters of the cooking chamber (12) are determined.

6. The method according to claim 5, **characterized in that** the amplitudes of the scattering parameters are determined.

7. The method according to claim 6, **characterized in that** for each antenna (22, 24, 42) the respective relationship of the backward travelling microwave signal and the forward travelling microwave signal is determined.

8. The method according to any of claims 5 to 7, **characterized in that** the phase relationships of the scattering parameters are determined.

9. The method according to claim 8, **characterized in that** the phase relationship of the scattering parameters is measured by means of a phase modulation in which a microwave signal is applied only to the first antenna (22) and the second antenna (24, 42), and a backward travelling microwave signal the amplitude of which changes by the phase modulation is measured at least at one antenna (22, 24, 42).

10. The method according to claim 9, **characterized in that** a backward travelling microwave signal is measured at all further antennas (22, 24, 42).

11. The method according to any of the preceding claims, **characterized in that** the amplitudes of the microwave radiation of the antennas (22, 24, 42) are driven based on the detected forward travelling and backward travelling microwave signals.

12. The method according to any of the preceding claims, **characterized in that** the voltage supply of the at least one semiconductor amplifier (26, 28, 44) is driven.

13. The method according to any of the preceding claims, **characterized in that** the progress of the cooking process is monitored on the basis of a change in the detected forward travelling microwave signals and/or a change in the detected backward travelling microwave signals.

14. A cooking appliance comprising a microwave generator (18), at least one semiconductor amplifier (26, 28, 44), at least two antennas (22, 24, 42) that are adapted to couple microwave radiation into the cooking chamber (12), at least one phase shifter (30) that is associated with at least one of the antennas (22, 24, 42), detection units (32, 34) that are configured to detect backward travelling microwave signals as well as forward travelling microwave signals, and a controller (20) that is coupled to the phase shifter (30) to vary the phase position of the microwave signal provided to one of the antennas (22, 24, 42) relative to the phase position of the microwave signal provided to a different antenna (22, 24, 42), **characterized in that** the controller (20) is further configured to control the relative phase position such that the power of the backward travelling microwave signal is minimized, the controller (20) mathematically determining a change to be made in the phase position based on the detected backward travelling microwave signals and the detected forward travelling microwave signals.

**Revendications**

1. Procédé de commande d'un appareil de cuisson à micro-ondes (2), comprenant les étapes suivantes :

   - un rayonnement micro-onde provenant d'un amplificateur à semi-conducteur (26, 28, 44) est fourni à une première antenne (22) et à au moins une deuxième antenne (24, 42) et est irradié dans un espace de cuisson (12) de l'appareil de cuisson (10) par les antennes (22, 24, 42) ;
   - un signal micro-ondes se déplaçant vers l'arrière couplé par l'espace de cuisson (12) dans l'antenne (22, 24, 42) est détecté ;
   - des signaux micro-ondes se déplaçant vers l'avant couplés par les antennes (22, 24, 42) dans l'espace de cuisson (12) sont détectés au niveau des antennes (22, 24, 42) ;
   - la position de phase du rayonnement micro-onde des deux antennes (22, 24, 42) l'une par rapport à l'autre est commandée de telle sorte que la puissance du signal micro-ondes se déplaçant vers l'arrière est minimisée, des signaux micro-ondes cohérents étant fournis aux antennes (22, 24, 42)

   **caractérisé en ce que**
   les signaux micro-ondes détectés se déplaçant vers l'avant ainsi que les signaux micro-ondes détectés se déplaçant vers l'arrière sont utilisés pour le calcul mathématique d'un changement de la position de phase, la puissance couplée dans un produit de cuisson étant ajustée de manière dynamique à l'aliment de cuisson respectif à cuire.

2. Procédé selon la revendication 1, **caractérisé en ce que** la position de phase du rayonnement micro-onde fourni à une première antenne (22) est supposée être constante, et la position de phase du rayonnement micro-onde fourni à une seconde antenne (24, 42) est modifiée par rapport à la position de phase du rayonnement micro-onde fourni à la première antenne (22).

3. Procédé selon la revendication 1 ou la revendication 2, **caractérisé en ce que** l'amplitude et la position de phase d'un signal micro-ondes se déplaçant vers l'avant d'une antenne (22, 24, 42) qui est associée à un aliment de cuisson se trouvant dans l'espace de cuisson (12) et qui ne doit pas être chauffé sont ajustées de telle sorte que les signaux micro-ondes se déplaçant vers l'arrière de cette antenne (22, 24, 42) sont minimaux.

4. Procédé selon l'une des revendications précédentes, **caractérisé en ce que** les signaux micro-ondes se déplaçant vers l'avant et/ou les signaux micro-ondes se déplaçant vers l'arrière sont détectés plusieurs fois au cours d'un processus de cuisson.

5. Procédé selon l'une des revendications précédentes, caractérisé en ce des paramètres de diffusion complexes de l'espace de cuisson (12) sont déterminés.

6. Procédé selon la revendication 5, **caractérisé en ce que** les amplitudes des paramètres de diffusion sont déterminées.

7. Procédé selon la revendication 6, **caractérisé en ce que** la relation du signal micro-ondes se déplaçant vers l'arrière et du signal micro-ondes se déplaçant vers l'avant est respectivement déterminée pour chaque antenne (22, 24, 42).

8. Procédé selon l'une des revendications 5 à 7, **caractérisé en ce que** les relations de phase des paramètres de diffusion sont déterminées.

9. Procédé selon la revendication 8, **caractérisé en ce que** la relation de phase des paramètres de diffusion est mesurée au moyen d'une modulation de phase dans laquelle un signal micro-ondes n'est appliqué qu'à la première antenne (22) et à la deuxième antenne (24, 42), et un signal micro-ondes se déplaçant vers l'arrière dont l'amplitude change par la modulation de phase est mesuré au niveau d'au moins une antenne (22, 24, 42).

10. Procédé selon la revendication 9, **caractérisé en ce qu'**un signal micro-ondes se déplaçant vers l'arrière est mesuré au niveau de toutes les autres antennes (22, 24, 42).

11. Procédé selon l'une des revendications précédentes, **caractérisé en ce que** les amplitudes du rayonnement micro-onde des antennes (22, 24, 42) sont pilotées sur la base des signaux micro-ondes se déplaçant vers l'avant et vers l'arrière détectés.

12. Procédé selon l'une des revendications précédentes, **caractérisé en ce que** l'alimentation en tension dudit au moins un amplificateur à semi-conducteur (26, 28, 44) est pilotée.

13. Procédé selon l'une des revendications précédentes, **caractérisé en ce que** la progression du processus de cuisson est surveillée sur la base d'une variation des signaux micro-ondes détectés se déplaçant vers l'avant et/ou d'une variation des signaux micro-ondes détectés se déplaçant vers l'arrière.

14. Appareil de cuisson comprenant un générateur de micro-ondes (18), au moins un amplificateur à semi-conducteurs (26, 28, 44), au moins deux antennes (22, 24, 42) qui sont aptes à coupler le rayonnement micro-onde dans l'espace de cuisson (12), au moins un déphaseur (30) qui est associé à au moins l'une des antennes (22, 24, 42), des unités de détection (32, 34) qui sont aménagées de manière à détecter des signaux micro-ondes se déplaçant vers l'arrière ainsi que des signaux micro-ondes se déplaçant vers l'avant, et une commande (20) qui est couplée au déphaseur (30) pour faire varier la position de phase du signal micro-ondes fourni à l'une des antennes (22, 24, 42) par rapport à la position de phase du signal micro-ondes fourni à une antenne différente (22, 24, 42), **caractérisé en ce que** la commande (20) est en outre aménagée de manière à commander la position de phase relative de telle sorte que la puissance du signal micro-ondes se déplaçant vers l'arrière est minimisée, la commande (20) déterminant mathématiquement un changement à effectuer dans la position de phase sur la base des signaux micro-ondes se déplaçant vers l'arrière détectés et des signaux micro-ondes se déplaçant vers l'avant détectés.

Fig. 1

Fig. 2

Fig. 3

EP 3 073 803 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8338763 B2
- US 20130334215 A1
- WO 2011058538 A
- US 20100176123 A1
- EP 1643641 A2
- WO 2013156875 A2
- EP 2983290 A1
- WO 2015052145 A1